# NEW EUROPEAN PATENT SPECIFICATION

(11) **EP 2 044 402 B2**
(45) Date of publication and mention of the opposition decision: **30.11.2016**
(45) Mention of the grant of the patent: 24.04.2013
(21) Application number: 07799772.4
(22) Date of filing: 24.07.2007
(51) Int. Cl.: G01N 33/543, G01N 35/00, C12N 15/10, G01J 3/00, G01J 3/44, G01N 21/65, B82Y 15/00, B82Y 25/00, G01N 1/40

(54) **Apparatus and method for performing an assay using magnetic particles**
Vorrichtung und Verfahren zur Durchführung eines Assays mittels magnetischer Partikeln.
Dispositif et procédé pour réaliser un dosage avec des particules magnétiques

(30) Priority: 24.07.2006 US 832921 P; 05.04.2007 US 910246 P; 05.04.2007 US 910256 P
(43) Date of publication of application: 08.04.2009
(60) Divisional application: 13164976.6
(73) Proprietor: Becton Dickinson and Company, Franklin Lakes, NJ 07417-1880 (US)
(72) Inventor: NORTON, Scott, M., North Carolina 27705 (US); HOLLAND, Edward, Robert, California 94043-2235 (US); WALTON, Ian, D., California 94062 (US); CROMER, Remy, California 95070 (US); STOERMER, Rebecca, Louise, California 94086 (US)
(74) Representative: Eder, Michael
(86) International application number: PCT/US2007/074161
(87) International publication number: WO 2008/014223

(56) References cited:
- GB-A- 1 452 271
- JP-A- 1 272 972
- JP-A- 4 348 277
- JP-A- 6 300 762
- JP-A- 63 106 559
- US-A- 5 238 810
- US-A- 5 238 811
- US-A- 6 150 182
- US-A1- 2004 021 073
- US-A1- 2006 240 572
- US-B1- 6 254 830
- US-B1- 6 858 440
- MOSIER-BOSS P A ET AL: "Surface-enhanced Raman spectroscopy substrate composed of chemically modified gold colloid particles immobilized on magnetic microparticles" ANALYTICAL CHEMISTRY, AMERICAN CHEMICAL SOCIETY, US LNKD- DOI:10.1021/AC048647F, vol. 77, no. 4, 15 February 2005 (2005-02-15), pages 1031-1037, XP002423178 ISSN: 0003-2700
- P. MOSIER-BOSS ET AL.: 'The Evaluation of Two Commercially Available, Portable Raman Systems' ANALYTICAL CHEMISTRY INSIGHTS 01 September 2013, pages 83 - 97
- L. LIU ET AL.: 'Magnetic Nanocrescents as Controllable Surface-Enhanced Raman Scattering Nanoprobes for Biomolecular Imaging', 18 November 2005, WILEY-VCH VERLAG GMBH & CO. KGAA, WEINHEIM pages 2683 - 2688

## Description

### TECHNICAL FIELD

The present invention is directed toward an apparatus and method for concentrating and imaging particles associated with certain assays.

### BACKGROUND OF THE INVENTION

Particles and magnetic, paramagnetic or superparamagnetic particles in particular, may be used in diagnostic assays as solid phase capture or detection species. Microparticle-based assays can be divided into two main categories: homogeneous (separation-free) and heterogeneous assays.

In a homogeneous (separation-free) assay format, binding reactants are mixed and measured without any subsequent washing step prior to detection. The advantages of such a system are fast solution-phase kinetics, a simple assay format, simpler instrumentation as well as lower costs because of fewer assay steps, low volumes and low waste. Homogeneous immunoassays do not require physical separation of bound and free analyte and thus may be faster and easier to perform then heterogeneous immunoassays. Homogeneous immunoassay systems using small sample size, low reagent volume and short incubation times, provide fast turnaround time. Disadvantages of this type of assay can be limited dynamic range and sensitivity. Since there is no separation of free analyte before signal detection, sensitivity might be further compromised. Also, interferences could cause a high background signal by interaction between the sample and capture or detection reagents. Homogeneous assays are the preferred assay format in high throughput screening platforms such as AlphaScreen, SPA, fluorescent polarization and flow cytometry based assays, as well as in diagnostic assays such as particle agglutination assays with nephelometry or turbidimetry as the detection methods.

Various types of assay involve the association of optically labeled detection particles with magnetic capture particles. When magnetic capture particles are used in a homogeneous (separation-free) assay format, the behavior of the particles in a magnetic field can be utilized to concentrate or differentiate the magnetic particles and anything which might be bound to them from other components of the assay. In assay implementations where the capture particles are bound or otherwise associated with optically labeled detection particles, it is difficult using known technologies to concentrate the capture particles at the focal plane of an optical interrogation system. Further difficulty is introduced if it is desired that the magnetic capture particles be concentrated in a relatively compact and/or small pellet for interrogation.

The present invention is directed toward overcoming one or more of the problems discussed above.

JP-A-04 348 277 (Figs. 1-3) discloses clinical examination of a large number of in-vivo substances by concentrating magnetic particles having an in-vivo substance-containing composite bonded thereto in the lateral area of the analyzing solution receiving part of an analytical reactor. The magnetic concentrator consists of magnets 3 and a support 4 whereby magnetic particles having a substance to be measured and a substance such as an antibody bonded to the surfaces thereof are received in an analytical container 2. When the magnets 3 are arranged around the container 2 in four directions at an equal interval, the magnetic particles in the analyzing solution receiving part of the container 2 are attracted to the magnets 3 to move through an analyzing solution to the lower part of the side wall of the container. The labelled substance bound to the substance to be measured reacts with the composite formed by the binding reaction of the magnetic particles and the substance to be measured to measure absorbency or transmissivity by a spectrophotometer.

### SUMMARY OF THE INVENTION

The present invention includes an assay apparatus having a sample vessel within which an assay may be performed. The apparatus further includes a holder configured to operatively receive the sample vessel. The invention further includes a magnet operatively associated with the holder such that a magnetic field generated by the magnet intersects a portion of the sample vessel defining a magnetic concentration region within the sample vessel. The magnet may be a permanent magnet or an electromagnet. The invention further comprises a spectrometer. The spectrometer may also include apparatus specifically configured to receive and hold the sample vessel such that the focus of the spectrometer is within the magnetic concentration region of the sample vessel.

The various embodiments of the assay apparatus described herein are suitable for use with any assay where optically labeled particles become associated with magnetic, paramagnetic or superparamagnetic capture particles. The term magnetic particles as used herein includes conventional magnetic particles, paramagnetic particles, superparamagnetic particles or any other type of particle affected by a magnetic field. In one embodiment which is described in detail herein, the spectrometer is a Raman spectrometer and the optically labeled detector particles are SERS nanotags.

The invention includes a sample vessel, holder and magnet defining a magnetic concentration region as described above and includes a spectrometer which may be operatively associated with the holder such that the focus of the spectrometer is within the magnetic concentration region when a sample vessel is placed into or on the holder. In this aspect of the present invention, an intermediate step of moving the sample vessel from the holder/concentrator to a separate spectrometer is eliminated. Two significant advantages are achieved with an embodiment with combined functions. The first advantage is improved accuracy in placing the magnetic particles (or defining the magnetic concentration region) within the sample vessel, such that measurement repeatability is improved, and the possibility for false negative results (missing the concentrated pellet of magnetic particles altogether) is avoided. The second advantage concerns eliminating the step of moving the sample vessel from the holder/concentrator to a separate spectrometer, thus sample reading is reduced to a single step operation. Furthermore, the associated risk of movement of the pellet within the sample vessel or disassociation of the pellet during transfer to the spectrometer, which may cause errors in measurement, is eliminated.

The apparatus of the invention described herein further includes means associated with the sample vessel to stimulate relatively compact concentration of the magnetic capture particles within the magnetic concentration region. Said means to stimulate relatively compact concentration are an acoustic transducer which might be an ultrasonic transducer configured to transmit acoustic waves through the sample vessel. Suitable compaction methods include the use of the devices described immediately above plus manipulation of the vessel in order that the pellet is forced to re-form at a different location on the vessel wall. For example, manipulation may include removal of the tube from the magnetic field and its replacement at an alternative orientation, or removal and reapplication of the magnet or magnets at a different location on the tube. In addition, the compaction enhancement methods can be applied with or through a separate localizing apparatus, or an apparatus that includes a spectrometer or other interrogation device.

The invention also includes a method of performing an assay. Embodiments of the method of the present invention include associating magnetic capture particles with optically active detection particles in a sample vessel, magnetically concentrating the magnetic capture particles in a concentration region of the sample vessel, and obtaining a spectrum from the magnetic concentration region utilizing apparatus as described above. The method includes stimulating compact concentration by projecting acoustic waves.

In each embodiment disclosed it is advantageous to minimize the amount of assay fluid which is outside of the concentration region, but along the optical path between the spectrometer and the concentration region. Apparatus and techniques disclosed to achieve this goal include but are not limited to positioning the various components so that the magnetic concentration region is caused to form where the optical path initially intersects the sample holder.

Various assays featuring the use of magnetic capture particles and optically labeled detection particles which assays may be implemented with the apparatus and methods described herein are fully described in co-pending application no. PCT/US07/61878 entitled "SERS NANOTAG ASSAYS".

### BRIEF DESCRIPTION OF THE DRAWINGS

Fig. 1 is a schematic diagram of a sample vessel and sample vessel holder.
Fig. 2 is a plan schematic diagram of a sample vessel and magnetic concentration assembly.
Fig. 3 is an elevation schematic diagram of a sample vessel and sample vessel holder.
Fig. 4 is a plan schematic diagram of an integrated sample vessel, concentration apparatus and spectrometer.
Fig. 5 is a graphic representation of signal strength growth as a function of time during magnetic particle capture.
Figs. 6A-C are schematic diagrams of representative pellet compaction methods.
Fig. 7 is a schematic diagram of an example featuring an optically transparent capillary tube as the sample vessel.
Fig. 8 is a schematic diagram of an alternative example featuring an optically Fig. 8 a diagram of a featuring an optically transparent capillary tube as the sample vessel.
Fig. 9 is a schematic diagram of an example apparatus featuring a capillary tube sample vessel and cartridge docking.

### DETAILED DESCRIPTION OF THE INVENTION

As used throughout this application, the term "magnetic particles" shall be defined as conventional magnetic particles, paramagnetic particles, superparamagnetic particles or any other particle which is affected by a magnetic field. Certain advantages may be realized by having an apparatus for the capture and concentration of magnetic particles used with an assay where the capture and concentration apparatus is separate from the associated optical or other detection/interrogation instrumentation. For example, it may be desirable to minimize the time occupied by individual samples in the optical interrogation unit. Alternatively, advantages may be realized by having magnetic capture and concentration apparatus integrated with a spectrometer or other optical interrogation device. For example a fully integrated capture, concentration and imaging system minimizes the possibility of the misplacement or de-compaction of a pellet of concentrated magnetic particles since the sample vessel does not have to be moved between the concentration and optical interrogation steps. Accordingly, both separate and integrated apparatus embodiments are described in detail below. The types of apparatus described herein are not mutually exclusive embodiments. Features of the various types of apparatus described may be combined in hybrid apparatus to meet the specific needs of a user.

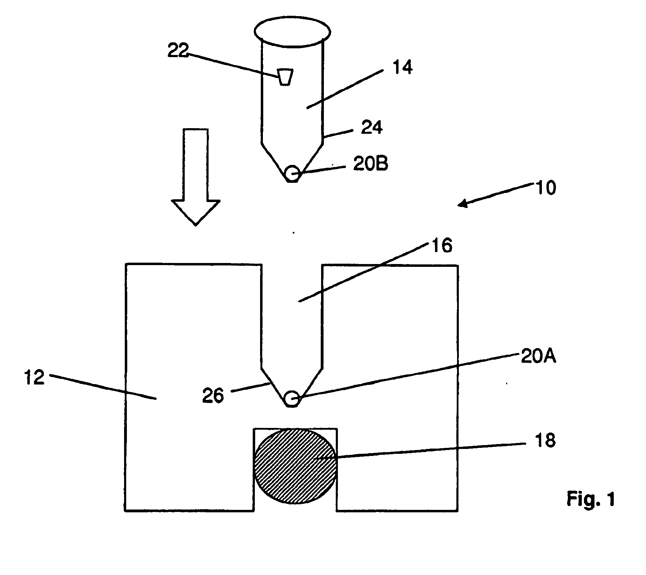

Fig. 1 is a schematic diagram of one possible embodiment of a magnetic capture and concentration apparatus 10 which may be implemented as a stand-alone apparatus separate from any optical interrogation unit. The magnetic capture apparatus 10 includes a holder 12 for one or more sample vessels 14. Fig. 1 also shows a receptacle 16 in holder 12 configured to hold the sample vessel 14. The particular holder 12 of Fig. 1 is configured to receive and hold a sample vessel 14 which is a microcentrifuge tube. Other types of tube, vessels, wells, chambers, slides or surfaces including but not limited to any other conceivable sample vessel shape could also be used to implement this embodiment. In the case of an alternatively shaped vessel, a suitably sized and shaped receptacle 16 would be associated with the holder 12 to assure that the selected variety of sample vessel 14 can be quickly, accurately and repeatably positioned with respect to the holder 12.

Also shown in Fig. 1 is a magnet 18 operatively associated with the holder 12. In the example shown, the magnet 18 is a spherical permanent magnet positioned below the tip of the receptacle 16 for the sample vessel 14. Such a magnet 18 may be utilized to affect a magnetic field gradient throughout the suspended volume of magnetic particles in the sample vessel 14 and may thus be utilized to define a magnetic concentration region 20. In the example illustrated in Fig. 1, the magnetic concentration region 20A is located at the lower tip of the receptacle 16 and a corresponding magnetic concentration region 20B is formed at the lower tip of the sample vessel 14 when it is placed in the receptacle 16.

Although a spherical magnet is shown in Fig. 1, any other suitable shape and relative size of magnets, which may be either permanent magnets or electromagnets, are equally suitable for implementation of the present invention. For example, a linear magnet may be used to provide for a linear pellet which may be scanned along a length. In addition, it may be desired in certain implementations to modify the profile of the magnetic field generated by using a combination of a magnet plus a "pole piece" constructed from an appropriate ferromagnetic material, for example, steel alloys or other suitable materials known to those skilled in the art. This approach can be used to optimise the magnetic field pattern for the purpose of concentration and localisation of magnetic particles.

Additionally, sample vessels having any number of customized shapes may be used to effectively implement the apparatus. The customized shape might include a protrusion or indentation or other structure or form at or near the magnetic concentration region 20 described above. The customized shape may affect the nature of the pellet formed in the concentration step. The development of a concentrated, well-formed, and consistent magnetic pellet from magnetic capture particles and associated optical labels is a function of the magnetic field architecture as well as the sample tube morphology at the magnetic concentration region 20. Thus, the size and shape of the concentrated pellet can be altered by altering the shape of the surface the magnetic capture particles are collected upon or within. Therefore, customized tube architecture with a dimple (or cusp) or other shaped structure or form at or near the magnetic concentration region could aid in the formation of a magnetic pellet having reproducible size, shape and consistency. For example, a concave cusp may be utilized to form a spherical pellet at the bottom or side of a customized collection vessel.

Other shapes or forms associated with a vessel may be devised to facilitate the formation of a concentrated pellet of select shape and size. Thus, the sample vessel 14 has 4 primary functions:
1) It provides a sealed environment for containment of the assay reagents, and for the conduction of the assay reaction.
2) It may have a specific shape or may include a specifically formed portion conducive to the concentration of magnetic particles by application of a magnetic field.
3) It is appreciably transparent to the radiation associated with making an observation of the reagents within the tube.
4) It has an overall form which repeatably and accurately fits within a holder.

The material of the sample vessel 14 must be compatible with the reagents and analyte substances intended for use in the assay. Certain chemical or biological coatings may be applied to the vessel to prevent non specific binding of magnetic particles, optical tag or analyte to the vessel walls. The sample vessel 14 should be constructed of a non-magnetic material, such that a magnetic field applied from an external source passes through the sample vessel 14 unaffected. Furthermore, it should be designed such that consideration is given to the maximum distance that would be travelled by reagents to the localisation spot. This governs the speed and efficacy of magnetic capture, since the attractive force decreases rapidly as the distance from the magnet system is increased. Additionally, the shape of the sample vessel 14 can be useful in concentration of the particles and pellet formation, through the overall shape of the vessel or through a special structure such as a dimple or cusp as described above. The sample vessel 14 also provides a means for accurate placement in holders for magnetic concentration, or spectroscopic measurement.

The form of the sample vessel 14 may include external geometric features, markers or indicia 22, to enhance the repeatability of positioning, and prevent incorrect vessel insertion within the holder apparatus. Positioning features could include (but are not limited to) the inclusion of flat sections, keyways, fiducial points etc. These would match similar features in a specifically designed vessel receptacle associated with magnetic localisation, spectroscopic measurement or combination of these functions, all as described herein.

In embodiments where assay interrogation is performed optically, typically a select laser output is applied to the concentrated pellet. Thus the sample vessel 14 should be appreciably transparent in the desired laser interrogation wavelength region. Moreover, it is desirable to ensure that the localising region has optical properties compatible with the lens system of the spectrometer or other detection device. Flat optical surfaces that allow the entry and exit of excitation and emitted light with minimal refraction, reflection or scattering may be desired. Alternatively, surfaces with curvature in one or more dimensions intended to function as lenses may be beneficial. Furthermore, the vessel design should allow the simultaneous presence of a magnetic localising system and operation of the spectrometer in the case where both functions are included in one instrument. The magnetic concentration region 20 can be at any position on the sample vessel 14 conducive to the ability to concentrate and localise the assay reagents and make optical measurements. This includes (but is not limited to) the bottom, sidewall or top cap of the sample vessel 14.

The various embodiments described herein are particularly advantageous for the concentration of magnetic capture particles associated with SERS nanotags or similar SERS taggants as the optically labeled detection particles. SERS nanotags have a SERS active core associated with a Raman reporter molecule which may be interrogated through Raman spectroscopy. Accordingly, it is useful in any implementation of the present invention which features Raman spectroscopy that the material of the sample vessel 14 be transparent to Raman light scatter. For example, the apparatus schematically illustrated in Fig. 1 features a sample vessel 14 that is a microcentrifuge tube which is typically made of polypropylene. The primary limitation with respect to Raman spectroscopy is that the sample vessel wall 24 not interfere through absorption both at the laser excitation wavelengths, including, but not limited to, 633nm or 785 nm wavelengths, as well as the subsequent Raman emission wavelengths. Indeed, an ideal material would also not contribute Raman interference and/or fluorescence at these excitation wavelengths, as well. A wide variety of inexpensive and commonly used assay vessels meet this criteria including 96 or other number well plates, various tubes, vials, vacutainers, slides surfaces, cups or other surfaces or containers. The materials from which these containers or surfaces are fabricated might be selected from the following non-exhaustive list; glass, silica, silicon, siliconized glass, polypropylene, polyethylene, polyurethane, Teflon, polystyrene, nitrocellulose, cellulose, polyester and polycarbonate. Other materials that do not interfere with laser light in the relevant wavelengths would also be suitable for the fabrication of a sample vessel 14.

In the arrangement shown in Fig. 1, it is important that the sample vessel 14 be held in the receptacle 16 as accurately and repeatably as possible with respect to the position of the magnet 18. Sample vessel 14 placement accuracy ensures that the pellet of magnetic capture particles formed during any concentration step develops in a consistent position and with a consistent size and shape. In one embodiment, featuring a holder 10 that is separate from any spectrometer, the sample vessel 14 must be removed and placed into an optical spectrometer to optically determine the content of the optically labeled particles associated with the magnetic capture particles within the pellet. Accordingly, it is imperative that the sample vessel 14, holder 12 and magnet 18 be configured so that the magnetic concentration region 20 is coincident with the focal plane of the spectrometer optics when the sample vessel 14 is introduced into a separate spectrometer. For example as illustrated in Fig. 1 the pellet is formed at the tip of a microcentrifuge tube by registering the magnetic axis of the magnet 18 with lengthwise central axis of the microcentrifuge tube. Accurate positioning of the bottom of the microcentrifuge tube is achieved by allowing it to sit in a conical recess 26 of the receptacle 16 such that it is automatically self-centering. The geometry of the recess 26 may be replicated in a separate holder at the focal plane of a spectrometer.

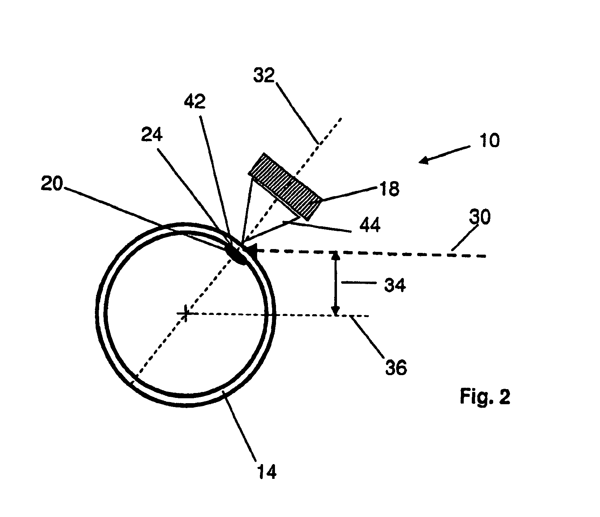

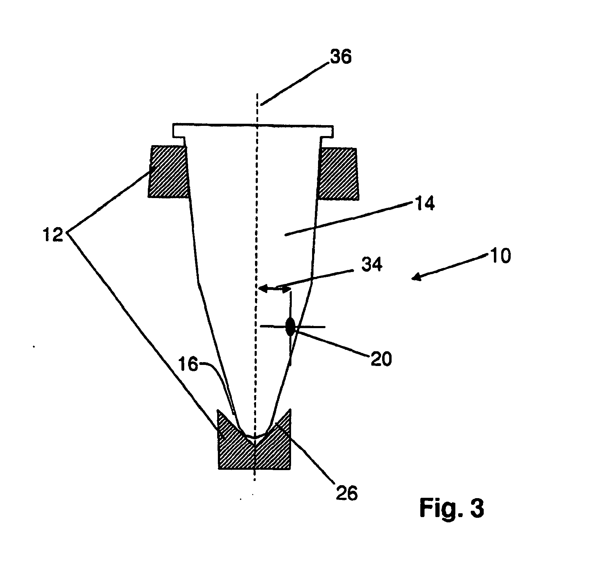

Figs. 2 and 3 are plan and elevation schematic views of an alternative embodiment of the sample holder 10 featuring pellet formation on the side of the sample vessel 14 rather than at the bottom tip. The Fig. 2 and 3 embodiment is shown with the vessel being a microcentrifuge tube, but is applicable for other vessels with different wall geometry. The Fig. 2 and Fig. 3 embodiment includes the following features:
- The sample vessel 14 is contained in the receptacle 16 of a holder 12 in a secure, precise position. Through the optional incorporation of reference surfaces or fiducial points, precise positioning is assured for repeated placements of a single vessel, or a series of vessels of the appropriate pattern.
- Receptacles for separate, discrete localising and spectrometer measuring operations may be produced with sufficient accuracy to ensure that material localised in the sample vessel 14 concentration region 20 falls precisely at the focal plane when removed and placed in a corresponding receptacle associated with a spectrometer.

As illustrated in Fig. 2, the magnet assembly must not obscure the laser/optical view of the magnetic concentration region 20. This need is met by assuring that the optical path 30 and central axis 32 of the magnet system are set at an angle relative to each other. This places the pellet off centre from the tube's central axis, when interrogated by a spectrometer. This necessitates an offset 34 between the optical path 30 and the tube axis 36.

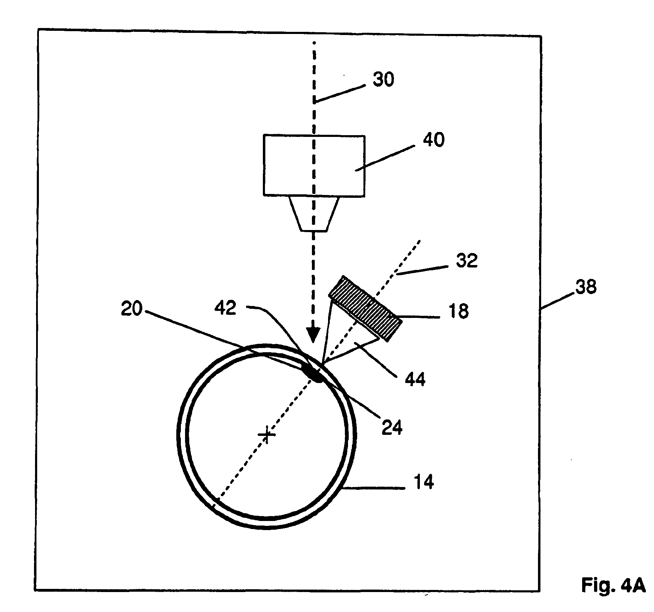

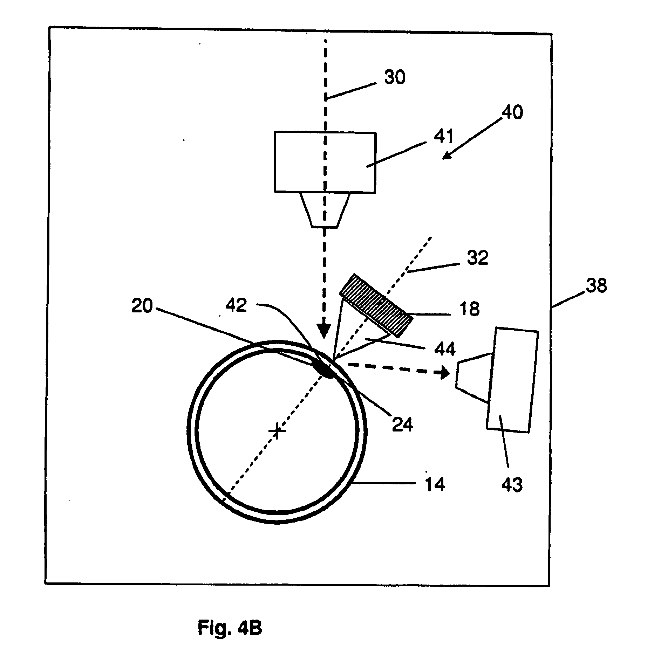

An alternative fully integrated magnetic concentration and imaging apparatus 38 is shown in the schematic diagram of Fig. 4. In the Fig. 4 implementation the magnetic capture and concentration step takes place at the focal plane of an associated spectrometer 40. This approach is advantageous because the possibility of misplacement or disassociation of the pellet formed in the magnetic concentration step when the sample vessel is moved to a separate spectrometer is eliminated. The integrated magnetic concentration and imaging apparatus 38 may be implemented as a bench-top laboratory apparatus, or, with appropriate miniaturization as a portable field assay device. In an alternative embodiment illustrated in the schematic diagram of Fig. 4B, it may be advantageous in certain implementations to decouple the excitation module 41 of the spectrometer 40 from a spatially separate detection module 43.

As is best shown in Figs. 2 and 4, in certain embodiments of the apparatus described herein, the magnetic concentration region 20 is located and the pellet is formed against the vessel wall 24 at the point of optical interrogation. This location for the magnetic concentration region 20 may be selected and advantageous in either a separate concentration apparatus 10 or an integrated magnetic concentration and imaging apparatus 38. In this desirable configuration, only the vessel wall 24 will be positioned between the pellet and the source of the spectrometer 40 or other optical interrogation device. This desirable configuration may be achieved by positioning the magnet 18 and the focal plane of the spectrometer 40 with respect to the sample holder 38 to minimize the quantity of assay fluid that is outside of the magnetic concentration region 20 but still along the optical path 30 between the spectrometer and the magnetic concentration region 20. This configuration may also be described in terms of the position of the concentration region 20 with respect to the interior wall 24 of the sample vessel 14. Accordingly, the magnet 18 may be positioned to cause the magnetic concentration region 20 to be formed substantially adjacent to a location where the optical path 30 between the spectrometer 40 and the magnetic concentration region 20 initially intersects the interior or interior wall 24 of the sample vessel 14. The advantageous pellet position may also be described in terms of an optical interface 42 defined by the interior side of the sample vessel wall 24 where it is initially intersected by the optical path 30. Thus, the magnetic concentration region 20 may be formed substantially adjacent to the interface 42.

Apparatus and methods where the amount of free assay fluid along the optical path is minimized are distinctly different from known devices where the spectrometer is positioned opposite the vessel from the magnetic concentration region. Optical interrogation through the assay medium as is typical with known devices can cause substantial read noise. In particular, read noise from unbound detection tags can be problematic in a case of a homogeneous (no wash) assay. Problems associated with unbound assays in the optical path can be eliminated or minimized by utilizing the novel configuration illustrated in Figs. 2-4.

As shown in Fig. 4, the magnetic capture element of the integrated apparatus 38 may include a magnet 18 possibly associated with a conical or other shaped pole piece 44. The pole piece 44 functions to cause a magnetic field gradient in a relatively smaller volume thus enabling the magnetic particles to be collected in a well defined magnetic concentration region 20. The magnetic concentration region 20 is shown in Fig. 4 on the side of a sample vessel 14. However, any position with respect to a sample vessel 14 which is suitable for magnetic concentration and which is at a focal plane of an associated spectrometer 40 would be a suitable location for a magnetic concentration region 20. As described above, a sample vessel 14 of any shape or size may be utilized to implement various embodiments. Certain advantages may be realized by utilizing a custom shaped vessel which has structure such as a dimple or other shaped surface which facilitates pellet development in certain dimensions.

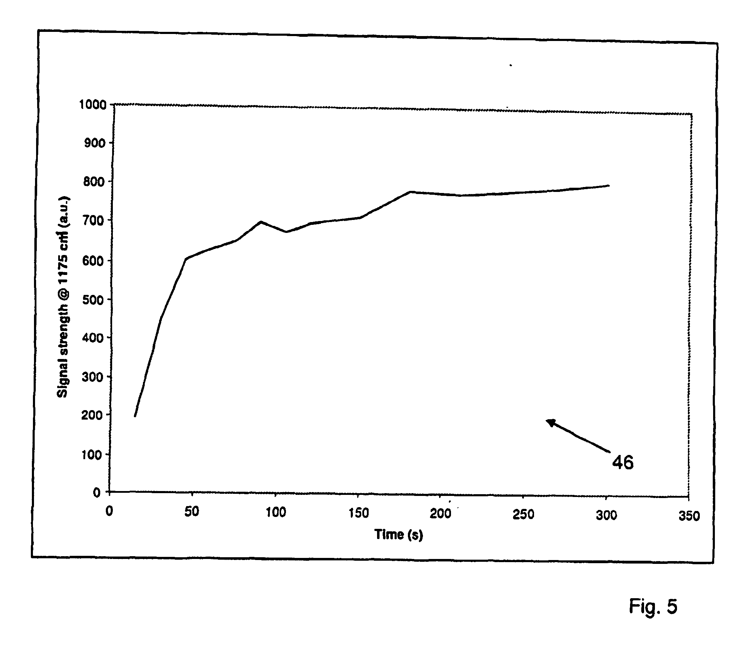

Graph 46 of Fig. 5 illustrates the progress of pellet formation during magnetic concentration as a function of time, as determined by the signal from SERS labels attached to magnetic beads in an immunological reaction scheme. It is desirable for spectroscopic analysis that the pellet size be as small as possible, since an appreciable part of the volume of captured particles may otherwise fall outside the laser illumination spot presented by typical instruments, which is generally a diameter of about 70 to 200 microns. It is also desirable that the pellet size be as small as possible for a given number of magnetic beads. This has multiple advantages. First, a dense pellet results in a smaller sampling area. In traditional spectroscopic capture, a smaller sampling area allows matching to a smaller spectrometer slit resulting in a higher spectral resolution for a given etendue (optical throughput). In addition, a denser pellet results in a higher signal-to-noise ratio as there will be a larger number of tags per unit sampling volume. A denser pellet should also improve sample-to-sample variance as a smaller pellet should match better to both the laser spot and optical collection area. Thus a collection area which is slightly larger than the pellet, should be relatively immune to signal variations from minor shape differences between pellets. Finally, a dense pellet of magnetic beads aids in obscuring the larger volume of solution, containing unbound optical label. This mechanism of obscuration could lower the detection floor, thus increasing sensitivity and leading to an improvement in the dynamic range of the test.

Pellet formation can be achieved with a static positioning between the sample vessel 14 and magnet 18. However, the magnetic particles may be concentrated to a smaller volume if the magnet 18 is moved relative to the surface of the sample vessel - a displacement of less than 1 mm is sufficient to achieve measurable concentration improvement. Movement of the magnet 18, however, may be impractical, due to the requirement that the position of the magnetic concentration zone 20 be in coincidence with the laser illumination from the spectrometer 40. According to the invention tight pellet formation is stimulated by use of techniques or methods including acoustic stimulation of the sample vessel 14. Vibrational energy is sufficient to dislodge particles that have become stuck to the vessel wall before reaching the final position of lowest potential energy nearest the magnet 18 or magnetic pole piece 44. Practical methods by which this may be achieved include momentary exposure of the sample vessel 14 and contents to a high pressure acoustic wave. These methods introduce enough perturbation to facilitate the formation of a lowest energy state dense pellet. In addition, there is the further option of causing the pellet to reform by manipulation of the sample vessel 14 in order that the pellet is forced to re-form at a different location on the vessel wall 24, e.g. by removal of the tube from the magnetic field and its replacement at an alternative orientation, or by removal and reapplication of the magnet 18 or magnets at a different location on the sample vessel 14.

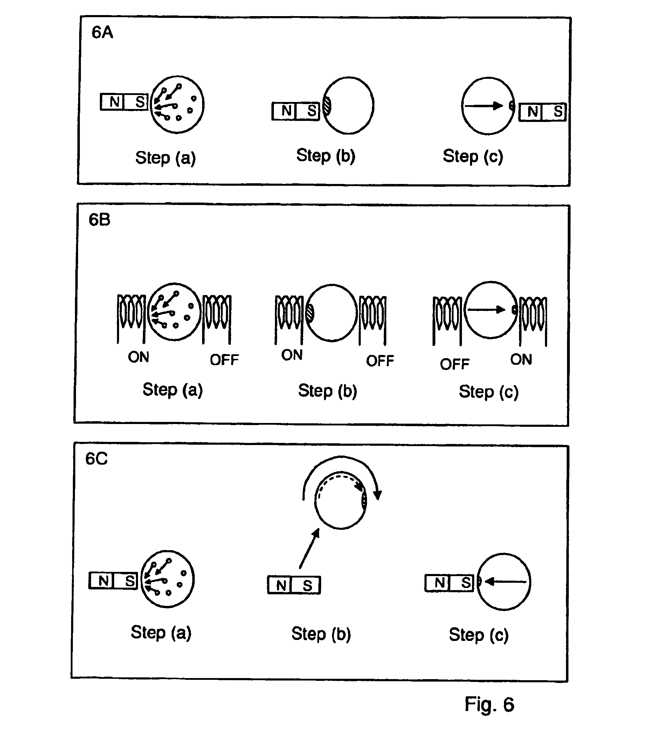

Figures 6A-C schematically illustrate three processes for compact pellet formation. In each case, step (a) is the initial capture of reagents from the starting point of complete dispersion in the assay fluid, step (b) is the completion of initial capture and pellet formation and step (c) involves forcing the pellet to reform and concentrate at a second capture point without significant redispersion. This can be achieved by:
- A single or combination of multiple permanent magnets that are moved in relation to the sample vessel in order to effect the desired pellet formation & manipulation. (Fig. 6A)
- A combination of electromagnets to achieve the same effect. (Fig. 6B)
- Mechanical adjustment of the tube position in the receptacle, for example 180° rotation of a cylindrical sample vessel to force pellet repositioning. (Fig. 6C)

In certain embodiments of an integrated capture/interrogation unit 38 such as shown in Fig. 4 it may be challenging to design a magnetic assembly which generates a strong enough magnetic field to pull magnetic particles down through the assay solution, to form a suitable pellet, and also provide clearance for the optical read-out. Thus, it may be advantageous to have magnetic concentration happen on one side of the sample vessel 14 while optical readout happens on the opposite side of the vessel. In such an embodiment, any curvature of the sample vessel 14 plus optical effects of assay components contained therein may act as an optical element. It is desirable as described above to achieve a small illumination spot and collection area. Accordingly, the optical system associated with the spectrometer 40 may be designed to compensate for the optical effects of the sample vessel 14. For example, optical elements including but not limited to astigmatic elements such as cylindrical lenses may be necessary to compensate for the astigmatism introduced by a given sample vessel 14. Alternatively, the optical effects of a sample vessel 14 might be minimized by using a rectangular sample vessel 14 such that the pellet is formed on a planar or flat surface of the sample vessel. Potentially, optical read out from the opposite side of a sample vessel 14 could improve optical efficiency because optical data collection will occur on-axis as opposed to the off-axis collection geometry illustrated in Fig. 4.

Although the embodiments of Figs. 1-4 show single sample vessels 14, high throughput parallel assays can easily be prepared and performed by using multiple parallel assay sample vessels holders and magnets. Well known devices such as 96-well plates may be suitable for a parallel implementation. Cusps, dimples or other structures could be formed in a well plate or similar multiple sample vessel to stabilize the pellet and facilitate concentration. The magnetic concentrator step and readout could occur in parallel or serially.

With a non-integrated magnetic capture and concentration apparatus 10 such as shown in Fig. 1 it is necessary to assure the alignment of the same vessel between two separate receptacles, the first associated with the concentration apparatus 10 and the second with the optical reader. Proper alignment can be assured by placing alignment features such as indicia 22 on the sample vessel. Molded features may be added to the vessel to register the tube in three dimensions. The sample vessel 14 should be manufactured or selected so that the sidewall thickness is controlled since this can affect pellet positioning in a non-integrated capture system 10. It is additionally desirable that the optical reader also contains a magnetic capture system for either or both the following reasons:
- To ensure precise positioning of the pellet after transfer of the sample vessel 14 and,
- To cause additional concentration of the pellet by causing it to re-form within the sample vessel 14, as described above

A ½" spherical NdFeB (rare-earth) magnet has been successfully used experimentally to create a pellet of magnetic beads and associated SERS tags in a single pull-down step. The sample vessel 14 used was a 200uL polypropylene microcentrifuge tube with 100uL or less of reagent. As shown on graph 46 of Fig. 5, adequate pull-down of particles leading to a relatively steady state optical signal was achieved in less than one minute.

In an alternative assay system embodiment, a whole pellet may be imaged using a tunable filter (LCTF, AOTF, etc.) to create a hyper-spectral image stack. If consistent pellet formation proves to be difficult, imaging the whole pellet combined with subsequent image analysis could provide a metric for a "total optical label" that is consistent without respect to the distribution or shape of the pellet.

Similarly, a diffuse pellet, for example a linear pellet formed by a linear magnet, could be adequate for a reproducible, homogeneous, magnetic pull-down assay if spatial information is captured by the means of a scanning or wide-field imaging system. In this embodiment, the pellet may be imaged and a software analysis step employed to determine a metric for the total signal (for example the SERS signal) emitted by each pellet. This implementation shares features with DNA microarray readers commonly available, except for the need for a relatively large number of spectral channels (i.e. hyperspectral imaging). Nonetheless, for a high-throughput system utilizing a microplate configuration with multiple wells, this could offer benefits. Optical resolution, on the order of 50um, could be adequate to allow an image processing algorithm to account for pellet size and shape differences to obtain a consistent total signal metric across replicate pellets. Prior research shows that a minimum number of spectral channels (-20-30 spectral channels), could be adequate to differentiate and quantitate SERS tags. In a wide-field embodiment this may provide for the use of liquid-crystal tunable filters (LCTF), or acousto-optical tunable filters (AOTF) to achieve spectral separation. With respect to a laser-point scanning system, a low spectral resolution dispersive spectrometer system could be adequate.

In a high-throughput detection system it may be preferable to separate the magnetic concentration step from the optical read step. Magnetic concentration freezes the chemical reaction and so all samples in a batch, for example all of the samples on a microwell plate, would require that their pellets be formed at the same time. Large process volumes may result in variation in the exact location of each pellet. One possibility to address this issue for high-throughput geometry, therefore, is to use an initial imaging step, not to gather spectral information, but merely to locate the pellets. An image processing step could extract the positions of all the pellets and use this information to position a conventional point spectrometer system under each pellet sequentially.

High throughput methods could include automated machinery to perform the following functions:
- Use of a magnet array for localisation of pellets within each vessel, for example each well of a 96 well plate to concentrate the pellets in all wells simultaneously. Automated apparatus could then transfer the plate to a scanning reader capable of reading the wells in sequence. Either the system must be of sufficient precision to guarantee pellet registration in each well with the reader, or a means of imaging to locate pellets must be provided prior to making spectroscopic measurements at the pellet locations thus determined.
- Alternatively, wells could be localised individually or row by row (or column by column), to improve the accuracy of reaction timing. Spectroscopic measurement could be implemented using any of the previously described methods

High throughput apparatus could be fabricated in which the sample vessels are discrete tubes. The tubes could be transported within the apparatus to various function "stations" by a conveyor track, belt or robotic system. The precise location and timing of each sample tube could be tracked by a microprocessor system that controls the apparatus function, enabling precise control of reaction timings, temperatures, mixing and measurement etc. Such an apparatus for the invention might include provision for process steps including but not limited to
- Delivery of reagents, analyte to the sample vessel.
- Control of vessel temperature and reaction time.
- Localisation of the assay components by application of a magnetic field.
- Optimisation of the pellet formation by methods described previously.
- Optical measurement of the localised reagents within the vessel.

The sequence of steps could include the methods of localisation separate from, or coincident with making optical measurements, in the same manner as described already, thus the high throughput apparatus would incorporate receptacles for the vessels that have magnet assemblies for localisation, and/or spectrometers operatively associated with magnet assemblies. Other variations upon the basic high throughput apparatus described herein are within the scope of this disclosure.

Another embodiment of the present invention utilizes a small bead composed of a material of high magnetic permeability (e.g. nickel, cobalt, etc) placed in the reaction vessel. The presence of the high-permeability bead will focus the magnetic field lines thus creating a high magnetic field gradient to attract the magnetic particles. The magnetic particle / assay tag complex could associate around the bead and the whole large assembly, consisting of a large "bead" with the surrounding small magnetic particles and assay tags would be imaged. This technique could assist in achieving a reproducible spherical pellet for optimal interrogation.

Another embodiment features automated positioning of the sample vessel 14 at the optical detector. This is a variation of a high-throughput method where readout is possibly performed serially but magnetic concentration can be accomplished in parallel. A set of sample vessels containing all pre-mixed reagents, perhaps introduced to the vessels through the use of an automated fluid handler system, would have a magnetic assembly to concentrate the magnetic particles with corresponding reagent. This would, in effect, stop the reaction, but would also be a coarse pull-down forming a large diversity of pellets. Each vessel could then be positioned in a holder 38 such as shown in Fig. 4 which would further concentrate the coarse pellet and allow for optical readout of the SERS or other signal. Thus, in this embodiment, all vessels would have an initial coarse magnetic concentration which would operate in parallel. The concentration would be "coarse" in the sense that the magnetic particles have been pulled out of suspension but might have formed a set of large, disperse pellets in each vessel. Nonetheless, the reaction would have ceased, and optical interrogation would continue serially with an automated robotic system which would position each tube for fine pellet positioning, condensing, and readout.

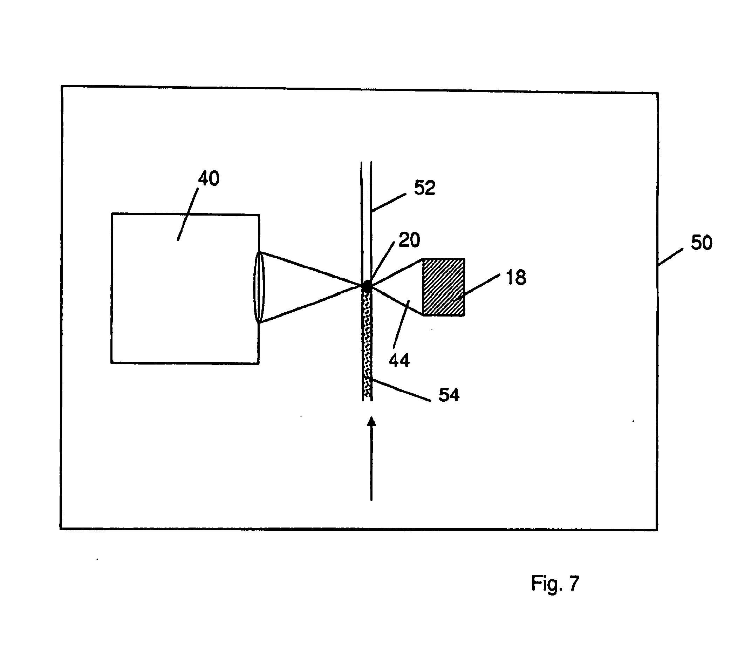

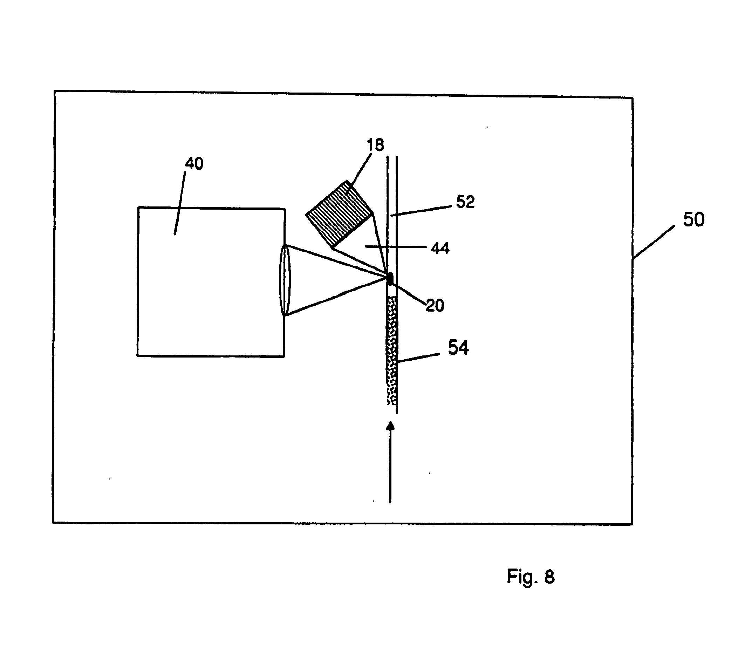

It may be desirable in either a normal or high throughput system to eliminate the need for pellet re-forming or conditioning. One suitable apparatus for use without pellet conditioning is schematically illustrated in Figs. 7 and 8. The apparatus 50 includes a capillary tube 52 in lieu of the other types of sample vessel described above. The capillary tube 52 is in fluid communication with an assay particle suspension 54. As the particle suspension 54 flows through the capillary tube 52, magnetic particles are concentrated within the tube 52 by a capture magnet 18 which may or may not be associated with a pole piece 44. The capture magnet 18 serves to concentrate magnetic particles at a specific magnetic concentration region 20 within the capillary tube 52. A spectrometer or other interrogation device which may be a Raman spectrometer 40 is operatively associated with the capillary tube 52 and focused upon the magnetic concentration region 20. As shown in Figs. 7 and 8, optical interrogation may occur along an optical path which is opposite from or merely offset from the magnetic axis.

The use of a capillary tube 52 as an alternative format sample vessel provides several distinct advantages including but are not limited to:
- Precise placement of magnetic particles in relation to the small area interrogated by a typical laser based system. This will potentially improve the accuracy of measurement where quantitative determination is required.
- The sampling vessel has inherently high optical quality. For example, the capillary tube 52 may have flat sides and be made of a material which is transparent at the necessary wavelengths. The capillary tube 52 is also potentially fixed in a location relative to the magnetic and optical components.
- A capillary tube apparatus 50 allows tests to be conducted with small sample volumes of less than 100 microlitres and small reagent quantities which may result in improved sensitivity.
- A capillary tube apparatus 50 permits rapid collection of a sample pellet with no conditioning required. The pellet is contained in a small area and is inherently tightly packed. The magnetic element is not required to provide attractive forces at great distance since the capillary tube wall and magnetic pole are arranged in close registration (for example, with a separation of not more than 1 mm). This is advantageous since the attractive force experienced by magnetic particles falls rapidly with increasing distance from the pole or pole piece 44 of a magnet system.
- The volume of fluid interrogated by the reader is reduced significantly by the use of a narrow capillary vessel. Hence the quantity of unbound tag, which would otherwise contribute an unwanted "background signal" may be made very small.
- Use of electromagnets in the capture mechanism may allow collection of magnetic particles at the concentration region and subsequent flushing of particles from this region. In this way the vessel could be used serially to read from multiple sample assay reactions. This could operate on demand, or semi-continuously as part of a larger automated system in which many tests are run in sequence.
- A capillary tube apparatus 50 could also be used to implement a lateral flow assay device. In a lateral flow assay, a capillary tube associated with a magnet replaces the typical cellulose fiber strip or other matrix. A reservoir or reservoir pad containing adsorbed reagents (for example: SERS tags and magnetic particles) may be arranged in communication with one opening in the capillary tube. Introduction of analyte fluid to the reservoir results in release of the particulate reagents, which are caused to flow along the capillary with the analyte in solution. The magnet traps magnetic particles at a precisely defined location. Any tags such as SERS particles attached to magnetic particles may be detected by means of a Raman spectrometer directed at the capture point. Precise location of the capture point in relation to the spectrometer may be effected through the magnet system.

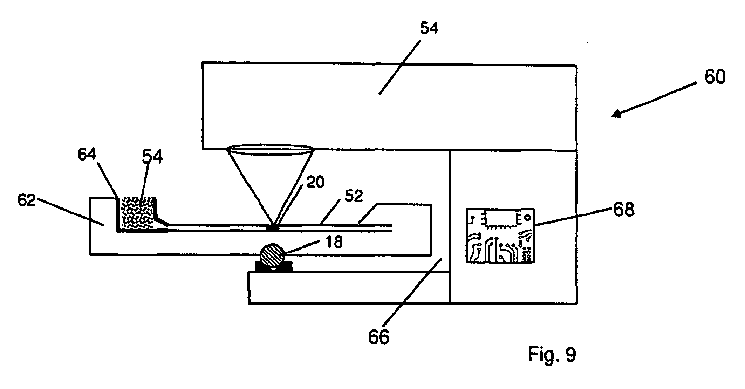

The capillary tube-based lateral flow example described immediately above is suitable for use as an integrated assay system which could if desired be developed in a very compact form factor for highly accurate and repeatable field assay usage. An integrated system 60 consistent with this example is schematically illustrated in Fig. 9. In the Fig. 9 example, the capillary tube 52 is mounted in a sample cartridge 62. The capillary tube 52 is in communication with a sample reservoir 64 formed in the sample cartridge 62. The assay particle suspension 54 necessary to perform an assay including magnetic particles and reagents may be mixed in the sample reservoir 64. Since the sample reservoir 64 is in fluid communication with the capillary tube 52, fully reacted assay suspension 54 is readily drawn toward the magnetic concentration region 20 by capillary action. In addition, excess assay particles are wicked away from the magnetic concentration region 20 minimizing background signal. At the magnetic capture region 20, a magnet 18 will concentrate magnetic particles as described above at the focal plane of a spectrometer 40 where optical interrogation of the concentrated sample may occur.

The integrated system 60 of Fig. 9 may be fabricated with a cartridge docking receptacle 66 configured to accurately receive and position the cartridge 62 so that the magnetic capture region 20 is properly aligned. The system 60 may also include data processing elements 68 associated with the spectrometer that enable the apparatus 60 to be used as a portable and potentially handheld stand-alone assay device.

## Claims

1. An assay apparatus comprising:
a sample vessel (14);
a holder (10) configured to operatively receive the sample vessel (14);
a magnet (18) operatively associated with the sample vessel holder (10) such that a magnetic field intersects with a portion of the sample vessel defining a magnetic concentration region for concentration of magnetic capture particles; and
a spectrometer (40) operatively associated with, or configured to operatively receive, the sample vessel (14) such that the focus of the spectrometer (1) is within the magnetic concentration region;
wherein the assay apparatus further comprises means to stimulate compact concentration of the magnetic capture particles in said magnetic concentration region,
said means being operatively associated with the sample vessel,
**characterized in that** said means to stimulate compact concentration is an acoustic transducer.

2. The assay apparatus of claim 1, wherein the spectrometer is a Raman spectrometer.

3. The assay apparatus of any one of claims 1 to 2, wherein the magnet and the spectrometer are positioned to minimize the quantity of assay fluid outside of the magnetic concentration region but within an optical path between the spectrometer and the magnetic concentration region.

4. The assay apparatus of any one of claims 1 to 3, wherein the magnet is positioned to cause the magnetic concentration region to be formed substantially adjacent to a location where an optical path between the spectrometer and the magnetic concentration region initially intersects the interior of the sample vessel.

5. The assay apparatus of any one of claims 1 to 4, wherein the sample vessel further comprises an internal wall wherein a portion of the internal wall which is initially intersected by an optical path from the spectrometer defines an interface and wherein the magnetic concentration region is formed substantially adjacent to the interface.

6. The assay apparatus of any one of the preceding claims, further comprising a pole piece for causing a magnetic field gradient.

7. A method of performing an assay comprising:
Associating magnetic capture particles with detection particles in a sample vessel;
Placing the sample vessel in a holder configured to receive the sample vessel and hold it in a select relationship with a magnet associated with the holder;
Magnetically concentrating the magnetic capture particles in a magnetic concentration region of the sample vessel;
Optionally removing the sample vessel from the holder and placing the sample vessel in a spectrometer configured to operatively receive the sample vessel such that the focus of the spectrometer is within the magnetic concentration region; and
Obtaining a spectrum from the magnetic concentration region with a spectrometer operatively associated with the sample vessel such that the focus of the spectrometer is within the magnetic concentration region;
wherein the method further comprises stimulating compact concentration of the magnetic capture particles in the magnetic concentration region by projecting an acoustic wave through the sample vessel.

8. The method of claim 7 wherein the spectrum obtained from the magnetic concentration region is a Raman spectrum, preferably wherein the Raman spectrum is obtained from a SERS taggant associated with the magnetic capture particles in the magnetic concentration region.

9. The method of performing an assay according to any one of claims 7 to 8 wherein the magnet and the spectrometer are positioned to minimize the quantity of assay fluid outside of the magnetic concentration region but within an optical path between the spectrometer and the magnetic concentration region.

10. The method of performing an assay according to any one of claims 7 to 9 wherein the magnet is positioned to cause the magnetic concentration region to be formed substantially adjacent to a location where an optical path between the spectrometer and the magnetic concentration region initially intersects the interior of the sample vessel.

11. The method of performing an assay according to any one of claims 7 to 10 wherein the sample vessel further comprises an internal wall wherein a portion of the internal wall which is initially intersected by an optical path from the spectrometer defines an interface and wherein the magnetic concentration region is formed substantially adjacent to the interface.

12. The method of performing an assay according to any one of claims 7 to 11 wherein the stimulation step comprises at least one of repositioning the sample vessel with respect to the magnet; repositioning the magnet with respect to the sample vessel and applying a magnetic field from more than one magnet to the sample vessel.

13. The method of performing an assay according to any one of claims 7 to 12, further comprising causing a magnetic field gradient by means of a pole piece.

## Patentansprüche

1. Testgerät, umfassend:
ein Probegefäß (14),
einen Halter (10), der konfiguriert ist, das Probegefäß (14) wirkend aufzunehmen,
einen Magneten (18), der mit dem Probegefäßhalter (10) wirkend in Zusammenhang steht, derart, dass sich ein Magnetfeld mit einem Teil des Probegefäßes schneidet und eine magnetische Konzentrationsregion zur Konzentrierung von magnetischen Fangteilchen definiert; und
ein Spektrometer (40), das wirkend mit dem Probegefäß (14) in Zusammenhang steht oder konfiguriert ist, das Probegefäß (14) wirkend aufzunehmen, derart, dass sich der Fokus des Spektrometers (10) innerhalb der magnetischen Konzentrationsregion befindet;
wobei das Testgerät weiterhin Mittel zur Stimulierung von kompakter Konzentrierung der magnetischen Fangteilchen in der magnetischen Konzentrationsregion umfasst,
wobei die Mittel mit dem Probegefäß wirkend in Zusammenhang stehen,
**dadurch gekennzeichnet, dass** das Mittel zur Stimulierung von kompakter Konzentrierung ein akustischer Wandler ist.

2. Testgerät nach Anspruch 1, wobei das Spektrometer ein Raman-Spektrometer ist.

3. Testgerät nach einem der Ansprüche 1 bis 2, wobei der Magnet und das Spektrometer positioniert sind, um die Menge an Testfluid außerhalb der magnetischen Konzentrationsregion aber innerhalb eines optischen Weges zwischen dem Spektrometer und der magnetischen Konzentrationsregion zu minimieren.

4. Testgerät nach einem der Ansprüche 1 bis 3, wobei der Magnet positioniert ist, um zu bewirken, dass die magnetische Konzentrationsregion im Wesentlichen an einer Stelle ausgebildet wird, wo angrenzend ein optischer Weg zwischen dem Spektrometer und der magnetischen Konzentrationsregion zuerst das Innere des Probegefäßes schneidet.

5. Testgerät nach einem der Ansprüche 1 bis 4, wobei das Probegefäß weiterhin eine Innenwand umfasst, wobei ein Teil der Innenwand, der zuerst von einem optischen Weg aus dem Spektrometer geschnitten wird, eine Grenzfläche definiert und wobei die magnetische Konzentrationsregion im Wesentlichen angrenzend an die Grenzfläche

6. Testgerät nach einem der vorhergehenden Ansprüche, weiterhin umfassend ein Polstück zur Bewirkung eines Magnetfeldgradienten.

7. Verfahren zur Durchführung von einem Test, umfassend:
Zusammenbringen von magnetischen Fangteilchen mit Detektionsteilchen in einem Probegefäß;
Anordnen des Probegefäßes in einem Halter, der konfiguriert ist, das Probegefäß aufzunehmen und es in einer ausgewählten Beziehung zu einem Magneten, der mit dem Halter in Zusammenhang steht, zu halten;
magnetisches Konzentrieren der magnetischen Fangteilchen in einer magnetischen Konzentrationsregion des Probegefäßes;
gegebenenfalls Entfernen des Probegefäßes aus dem Halter und Anordnen des Probegefäßes in einem Spektrometer, das konfiguriert ist, das Probegefäß wirkend aufzunehmen, derart dass sich der Fokus des Spektrometers innerhalb der magnetischen Konzentrationsregion befindet; und
Erhalten eines Spektrums aus der magnetischen Konzentrationsregion mit einem Spektrometer, das mit dem Probegefäß derart wirkend in Zusammenhang steht, dass sich der Fokus des Spektrometers innerhalb der Magnetfeld-Konzentrationsregion befindet;
wobei das Verfahren weiterhin das Stimulieren von kompakter Konzentrierung der magnetischen Fangteilchen in der magnetischen Konzentrationsregion durch Projizieren einer akustischen Welle durch das Probegefäß umfasst.

8. Verfahren nach Anspruch 7, wobei das aus der magnetischen Konzentrationsregion erhaltene Spektrum ein Raman-Spektrum ist, vorzugsweise wobei das Raman-Spektrum aus einem den magnetischen Fangteilchen in der magnetischen Konzentrationsregion zugeordneten SERS-Marker erhalten wird.

9. Verfahren zur Durchführung eines Tests nach einem der Ansprüche 7 bis 8, wobei der Magnet und das Spektrometer positioniert sind, um die Menge an Testfluid außerhalb der magnetischen Konzentrationsregion, aber innerhalb von einem optischen Weg zwischen dem Spektrometer und der magnetischen Konzentrationsregion zu minimieren.

10. Verfahren zur Durchführung eines Tests nach einem der Ansprüche 7 bis 9, wobei der Magnet positioniert ist, um zu bewirken, dass die magnetische Konzentrationsregion im Wesentlichen an einer Stelle ausgebildet ist, wo angrenzend ein optischer Weg zwischen dem Spektrometer und der magnetischen Konzentrationsregion zuerst das Innere des Probegefäßes schneidet.

11. Verfahren zur Durchführung eines Tests nach einem der Ansprüche 7 bis 10, wobei das Probegefäß weiterhin eine Innenwand umfasst, wobei ein Teil der Innenwand, der zuerst von einem optischen Weg aus dem Spektrometer geschnitten wird, eine Grenzfläche definiert und wobei die magnetische Konzentrationsregion im Wesentlichen angrenzend an die Grenzfläche ausgebildet wird.

12. Verfahren zur Durchführung eines Tests nach einem der Ansprüche 7 bis 11, wobei der Stimulierungsschritt mindestens eines von einer Neuanordnung des Probegefäßes bezüglich des Magneten; einer Neuanordnung des Magneten bezüglich des Probegefäßes, und einem Anlegen eines Magnetfelds von mehr als einem Magneten an das Probegefäß umfasst.

13. Verfahren zur Durchführung eines Tests nach einem der Ansprüche 7 bis 12, weiterhin umfassend das Bewirken eines magnetischen Gradienten mittels eines Polstücks.

## Revendications

1. Dispositif de test comprenant :
un récipient d'échantillon (14) ;
un support (10) configuré pour recevoir en fonctionnement le récipient d'échantillon (14) ;
un aimant (18) associé en fonctionnement avec le support de récipient d'échantillon (10) de manière à ce qu'un champ magnétique se croise avec une partie du récipient d'échantillon en définissant une région de concentration magnétique pour la concentration de particules de capture magnétiques ; et
un spectromètre (40) associé en fonctionnement avec, ou configuré pour recevoir en fonctionnement le récipient d'échantillon (14) de manière à ce que le foyer du spectromètre (1) soit au sein de la région de concentration magnétique ;
le dispositif de test comprenant en outre des moyens pour stimuler la concentration compacte des particules de capture magnétiques dans ladite région de concentration magnétique, lesdits moyens étant associés en fonctionnement avec le récipient d'échantillon,
**caractérisé en ce que** ledit moyen pour stimuler la concentration compacte est un transducteur acoustique.

2. Dispositif de test selon la revendication 1, dans lequel le spectromètre est un spectromètre Raman.

3. Dispositif de test selon l'une des revendications 1 et 2, dans lequel l'aimant et le spectromètre sont positionnés pour minimiser la quantité de fluide de test en dehors de la région de concentration magnétique mais au sein d'un chemin optique entre le spectromètre et la région de concentration magnétique.

4. Dispositif de test selon l'une des revendications 1 à 3, dans lequel l'aimant est positionné pour amener la région de concentration magnétique à être formée sensiblement à proximité d'un emplacement dans lequel un chemin optique entre le spectromètre et la région de concentration magnétique croise initialement l'intérieur du récipient d'échantillon.

5. Dispositif de test selon l'une des revendications 1 à 4, dans lequel le récipient d'échantillon comprend en outre une paroi interne, une partie de la paroi interne qui est initialement croisée par un chemin optique à partir du spectromètre définissant une interface et la région de concentration magnétique étant formée sensiblement à proximité de l'interface.

6. Dispositif de test selon l'une des revendications précédentes, comprenant en outre une pièce polaire pour créer un gradient de champ magnétique.

7. Procédé pour la mise en oeuvre d'un test comprenant:
associer des particules de capture magnétiques avec des particules de détection dans un récipient d'échantillon ;
mettre le récipient d'échantillon dans un support configuré pour recevoir le récipient d'échantillon et le tenir dans une relation de sélection avec un aimant associé avec le support ;
concentrer d'une manière magnétique les particules de capture magnétiques dans une région de concentration magnétique du récipient d'échantillon ;
en cas échéant, enlever le récipient d'échantillon du support et mettre le récipient d'échantillon dans un spectromètre configuré pour recevoir en fonctionnement le récipient d'échantillon de manière à ce que le foyer du spectromètre soit au sein de la région de concentration magnétique ; et
obtenir un spectre de la région de concentration magnétique avec un spectromètre associé en fonctionnement avec le récipient d'échantillon de manière à ce que le foyer du spectromètre soit au sein de la région de concentration magnétique ;
le procédé comprenant en outre l'étape de stimulation de la concentration compacte des particules de capture magnétiques dans la région de concentration magnétique en projetant une onde acoustique à travers le récipient d'échantillon.

8. Procédé selon la revendication 7, dans lequel le spectre obtenu à partir de la région de concentration magnétique est un spectre Raman, préférablement dans lequel le spectre Raman est obtenu à partir d'un marqueur SERS associé aux particules de capture magnétiques dans la région de concentration magnétique.

9. Procédé pour la mise en oeuvre d'un test selon l'une des revendications 7 et 8, dans lequel l'aimant et le spectromètre sont positionnés pour minimiser la quantité du fluide de test en dehors de la région de concentration magnétique mais au sein d'un chemin optique entre le spectromètre et la région de concentration magnétique.

10. Procédé pour la mise en oeuvre d'un test selon l'une des revendications 7 à 9, dans lequel l'aimant est positionné pour amener la région de concentration magnétique à être formée sensiblement à proximité d'un emplacement dans lequel un chemin optique entre le spectromètre et la région de concentration magnétique croise initialement l'intérieur du récipient d'échantillon.

11. Procédé pour la mise en oeuvre d'un test selon l'une des revendications 7 à 10, dans lequel le récipient d'échantillon comprend en outre une paroi interne, une partie de la paroi interne qui est initialement croisée par un chemin optique à partir du spectromètre définissant une interface et la région de concentration magnétique étant formée sensiblement à proximité de l'interface.

12. Procédé pour la mise en oeuvre d'un test selon l'une des revendications 7 à 11, dans lequel l'étape de stimulation comprend au moins l'une des étapes consistant à repositionner le récipient d'échantillon par rapport à l'aimant, repositionner l'aimant par rapport au récipient d'échantillon et appliquer un champ magnétique à partir de plus d'un aimant au récipient d'échantillon.

13. Procédé pour la mise en oeuvre d'un test selon l'une des revendications 7 à 12, comprenant en outre l'étape consistant à créer un gradient de champ magnétique au moyen d'une pièce polaire.
